# EUROPEAN PATENT APPLICATION

(11) **EP 4 439 909 A1**
(43) Date of publication of application: **02.10.2024**
(21) Application number: 23166126.5
(22) Date of filing: 31.03.2023
(51) Int. Cl.: H02J 3/36

(54) **A HIGH VOLTAGE DIRECT-CURRENT, HVDC, CONVERTER ARRANGEMENT AND A METHOD FOR CONTROLLING THE HVDC ARRANGEMENT**

(71) Applicant: Hitachi Energy Ltd, 8050 Zürich (CH)
(72) Inventor: Kumar- Nayak, Khirod, 760001 Odisha (IN); Nami, Ashkan, 72218 Västerås (SE); Hafner, Ying-Jiang, 771 42 Ludvika (SE); Sahu, Malaya, 771 32 Ludvika (SE); Abdalrahman, Adil, 723 46 Västerås (SE)
(74) Representative: AWA Sweden AB

(57) **Abstract**

A method (100) for controlling a High Voltage Direct-Current, HVDC, converter arrangement (1) is provided. The HVDC converter arrangement comprises an upper converter (11) connected between a positive DC pole (21) and a common neutral bus (20), and a lower converter (12) connected between a negative DC pole (22) and the common neutral bus. The method comprises the steps of determining (110) a DC voltage difference between a first DC voltage (Uₚₒₛ) across the upper converter and a second DC voltage (U_{neg}) across the lower converter, and adjusting (120) a DC voltage (Uₙₑᵤₜᵣₐₗ) at the common neutral bus so as to decrease the DC voltage difference.

## Description

### TECHNICAL FIELD

The present disclosure generally relates to the field of converter control, specifically control for HVDC converter arrangements and systems.

### BACKGROUND

The pace of implementation of HVDC arrangements and systems in transmission grids, i.e., systems configured for the transfer of electrical energy, has been steadily increasing for years. The pace has been further accelerated by the expanding use of renewable energy sources, such as solar and wind.

HVDC systems are particularly beneficial when used for transferring electrical energy which is generated at a remote location, and when the electrical energy generation is volatile. Therefore, HVDC systems are particularly suitable for transferring electrical energy which is generated by renewable energy sources, and especially when said electrical energy is being generated at remote locations, such as, for example, at off-shore sites.

HVDC systems often comprise a first terminal comprising a converter arrangement which is connected to a power plant, and a second terminal comprising another converter arrangement which is connected to a transmission grid, wherein the first and second terminals are connected to each other with HVDC transmission lines.

During operation of an HVDC system, i.e., when transferring electrical energy which is being generated at a power plant to a transmission grid, disturbances may occur. Large disturbances, which may be caused by, for example, faults or a malfunctioning of one or more converters of a converter arrangement, may be dealt in accordance with strictly defined procedures in order to ensure the safety of the power plant, the HVDC system and/or the transmission grid. However, such procedures may not be suitable for dealing with smaller disturbances or perturbations. Known strategies for dealing with smaller disturbances or perturbations may cause undue burden on different components of the power plant, the HVDC system and/or the transmission grid.

It is therefore of interest to provide an improved disturbance control for HVDC systems.

### SUMMARY

It is therefore a goal of the present disclosure to provide an HVDC converter arrangement and a method for controlling the HVDC arrangement which may provide an improved disturbance control.

To achieve this goal, the present disclosure provides an HVDC converter arrangement and a method for controlling the HVDC arrangement, as defined by the independent claims. Further embodiments are provided in the dependent claims.

According to a first aspect of the present disclosure, a method for controlling an HVDC converter arrangement is provided. The HVDC converter arrangement comprises an upper converter connected between a positive DC pole and a common neutral bus. The HVDC converter arrangement further comprises a lower converter connected between a negative DC pole and the common neutral bus. The method comprises determining a DC voltage difference between a first DC voltage across the upper converter and a second DC voltage across the lower converter, and adjusting a DC voltage at the common neutral bus so as to decrease the DC voltage difference.

According to a second aspect of the present disclosure, an HVDC converter arrangement is provided. The HVDC converter comprises an upper converter, connected between a positive DC pole and a common neutral bus, and a lower converter, connected between a negative DC pole and the common neutral bus, and a control system. The control system is configured to determine a DC voltage difference between a first DC voltage across the upper converter and a second DC voltage across the lower converter, and to adjust a DC voltage at the common neutral bus so as to decrease the DC voltage difference. It is to be understood that the control system may comprise one or more components and/or subsystems, which may be physically arranged at different places, and wherein said one or more components and/or subsystems may be configured for communication with each other.

According to a third aspect of the present disclose, an HVDC system is provided. The HVDC system comprises a first HVDC converter arrangement according to the first aspect, and a second HVDC converter arrangement. The first and second HVDC converter arrangements may be connected via transmission lines.

The embodiments of the present disclosure provide a control technique for the above-mentioned (first) HVDC converter arrangement, which may be understood as a non-grounded HVDC converter arrangement. The term "non-grounded" may be understood as the upper converter and the lower converter being connected in series, at a DC side of the HVDC converter arrangement, wherein the connection between the converters is not connected to ground. Thereby, the common neutral bus, which may alternatively be understood as, for example, a common neutral station, is a common connection point for the upper and lower converters. Alternatively, a non-grounded HVDC converter arrangement may be understood as a rigid HVDC converter arrangement. Further, an HVDC converter arrangement according to the present disclosure may be referred to as a bipole converter. Hence, an HVDC converter arrangement according to the present disclosure may be further referred to as a rigid bipole converter. The upper and lower converters may alternatively be referred to as first and second converters, respectively, or as positive and negative converters, respectively.

Historically, rigid bipole converters have been controlled in order to deal with smaller, and/or asymmetrical (i.e., at one pole), disturbances by making sure that a voltage at the common neutral station is kept at zero, or as close to zero as possible. However, a key insight, which has led to the inventive concept of the present disclosure, is that trying to maintain the voltage at the common neutral station at zero, or as close to zero as possible, when a small asymmetrical disturbance occurs, causes the converters to share unequal power. In other words, by trying to keep the voltage at the common neutral station at zero, or as close to zero as possible, a voltage across the converters, and active power output by the converters, deviates from each other. Thereby, symmetricity of the converters may be lost, and the converters may share an unequal amount of power, which is undesirable as the converters may be rated for the same (nominal) power and/or (nominal) voltage.

HVDC systems often comprise a first HVDC converter arrangement which may be connected to a power plant, and a second HVDC converter arrangement which may be connected to a transmission grid, wherein the first and second HVDC converter arrangements are connected to each other with HVDC transmission lines. When both HVDC converter arrangements are (effectively) grounded, the HVDC system may be referred to as being a bipole HVDC converter system, or a ground return bipole HVDC system. However, when only one of the two HVDC converter arrangements of the HVDC system is (effectively) grounded, the HVDC system may be referred to as a rigid bipole HVDC system.

For a rigid bipole HVDC system, one of the HVDC converter arrangements may be configured to be operated in an active power control mode, while the other HVDC converter arrangement may be configured to be operated in a DC voltage control mode. HVDC converters of an HVDC converter arrangement being configured to be operated in an active power control mode may be operated at a certain active power level based on respective active power references. Further, HVDC converters of an HVDC converter arrangement being configured to be operated in a DC voltage control mode may be operated at a DC voltage level, which may be equal to a predetermined value, or may be based on a DC voltage level reference. In order to maintain a stable behavior of the rigid bipole HVDC system it may be necessary to ensure that the voltage at the common neutral bus of the non-grounded HVDC converter arrangement does not fluctuate, i.e. change, vary, and/or oscillate, over time. Historically, this has been done by trying to keep said voltage at zero. However, it has been realized that this type of control can not sufficiently deal with unsymmetrical disturbances, such as a (small) disturbance in only one pole of the HVDC system, which may cause unequal sharing load for converters of the non-grounded HVDC arrangement.

The present disclosure aims at, at least partially, solving the above discussed issues by providing the proposed control methods. Specifically, instead of trying to maintain the voltage at the common neutral bus at zero, the proposed control methods comprise adjusting the DC voltage at the common neutral bus so as to decrease the DC voltage difference between the first DC voltage across the upper converter and the second DC voltage across the lower converter. In other words, the present disclosure aims at decreasing the DC voltage difference rather than maintaining the voltage at the common neutral bus at zero. Thereby, the present disclosure provides a minimization of the DC voltage difference, such that the DC voltage difference is minimized, i.e. equal, or close to, zero. This provides an increased symmetricity with regards to active power provided, or received, by, and/or the voltage across, the converters of a HVDC converter arrangement according to the present disclosure. The improved symmetricity causes any increased voltage across the upper and lower converters, caused by an asymmetrical disturbance or perturbation, to be equally, evenly, or at least more evenly, shared by the upper and lower converters. The prior art would try to maintain the voltage at common neutral bus, causing the entire increased voltage to be across one of the upper and lower converter. Thereby, the present disclosure provides an improved control for HVDC systems, and especially an improved disturbance control for HVDC systems.

The upper converter and the lower converter may be configured to operate at an active power level based on a first power reference and a second power reference, respectively. Being configured to operate at an active power level based on power reference may be understood as being configured to be operated in accordance with an active power mode. Operating the upper and lower converters in an accordance with an active power mode may facilitate the adjustment of the DC voltage difference, or in other words, it may facilitate operating the common neutral bus as a floating point.

Adjusting a DC voltage at the common neutral bus may comprise calculating a power reference difference based on the determined DC voltage difference, updating the first power reference to be equal to a predetermined power reference plus, or minus, the power reference difference, and updating the second power reference to be equal to a predetermined power reference minus, or plus, the power reference difference. The term "a power reference" may be understood as, but not limited to, an active power reference. Adjustments of power supplied, or absorbed, by a first HVDC converter arrangement may be performed by controlling switches of converters of the first HVDC converter arrangement so as to change on- and off-times for the switches, such that more, or less, power is supplied, or absorbed.

When the first power reference is updated to be equal to the predetermined power reference plus the power reference difference, the second power reference may be updated to be equal to the predetermined power reference minus the power reference difference. Correspondingly, when the first power reference is updated to be equal to the predetermined power reference minus the power reference difference, the second power reference may be updated to be equal to the predetermined power reference plus the power reference difference. In other words, the first and second power references may be updated in opposite directions with regards to the power reference difference. Phrased differently, the first and second power reference may be balanced with regards to the power reference difference.

Adjusting a DC voltage at the common neutral bus may comprise calculating a current difference based on said determined DC voltage difference, updating a first active current reference to be equal to an active current reference plus, or minus, the current difference, and updating a second active current reference to be equal to the active current reference minus, or plus, the current difference. Alternatively, adjusting a DC voltage at the common neutral bus may comprise calculating an angle difference based on said determined DC voltage difference, updating a first angle reference to be equal to an angle reference plus, or minus, the angle difference, and updating a second angle reference to be equal to the angle reference minus, or plus, the angle difference.

One advantage of adjusting the DC voltage the common neutral bus based on a current difference or an angle difference, as described in the above, is that it allows for the HVDC converter arrangement to be configured to be operated in an active power mode, or in a DC voltage control mode.

The first HVDC converter arrangement, which may be operated in an active power mode, may be connected via transmission lines, or cables, to a second HVDC converter arrangement, which may be operated in a DC voltage control mode. In such an HVDC system, i.e., comprising the first and second HVDC converter arrangements, the second HVDC converter arrangement may be viewed as configured to maintain predetermined DC voltages at the DC poles of the system, which includes the positive and negative DC poles of the first HVDC arrangement.

If the DC voltage difference is above a predetermined value, the method may comprise the step of limiting the DC voltage at the common neutral bus using a surge arrester. Correspondingly, the HVDC converter arrangement may comprise a surge arrester, and the control system may be further configured to limit the DC voltage at the common neutral bus using the surge arrester. The surge arrester may be able to provide handling of larger disturbances. Therefore, the present disclosure may be able to provide improved handling of large and small disturbances. Thereby, an increased level of safety and/or control may be provided.

The method may further comprise, and the control system may be further configured for, receiving the DC voltage across the upper converter and receiving the DC voltage across the lower converter. The DC voltages across the upper and lower converters may be measured. The measuring may comprise measuring voltages at the positive DC pole, the negative DC pole and/or the neutral common bus. The DC voltage across the upper converter may be understood as a voltage difference between a voltage at the positive DC pole and a voltage at the common neutral bus and the DC voltage across the lower converter may be understood as a voltage difference between the voltage at the common neutral bus and the negative DC pole. The DC voltages across the upper and lower converters may therefore correspond to measured voltage differences.

The DC voltage across the upper converter and the DC voltage across the lower converter may be received within a predetermined time interval. Further, the DC voltages across the upper and lower converters may be measured at the predetermined time interval. Thereby, a time delay for receiving said DC voltages may be less than, or equal to, the predetermined time interval. The DC voltages may be represented by signals which may be received by a control system configured for controlling HVDC converter arrangements and systems according to the present disclosure. The performance of the method disclosed herein may be improved by receiving said DC voltages across the converters within a shorter time interval, or with a shorter delay. The predetermined time interval may be less than, for example, 20 milliseconds, or preferably, less than 10 milliseconds.

The upper and lower converters may be rated for the same voltage. The term "voltage" may be understood as, but not limited to, nominal voltage. The upper and lower converters may be rated for a similar voltage. In other words, the upper and lower converters may be rated for voltages which are between 0 and 10% from each other, or preferably between 0 and 5% from each other, and more preferably within 0 and 1% from each other.

The HVDC converter arrangement may be configured to be connected to another HVDC converter arrangement via the positive and negative DC poles. The two HVDC converter arrangements may be connected via transmission lines, or transmission cables. The other HVDC converter arrangement may be configured to be operated in a DC voltage mode, and to provide, or supply, predetermined DC voltage levels at the positive and negative DC poles.

Other objectives, features and advantages of the enclosed embodiments will be apparent from the following detailed disclosure, from the attached dependent claims as well as from the drawings.

### BRIEF DESCRIPTION OF THE DRAWINGS

This and other aspects of the present disclosure will now be described in more detail, with reference to the appended drawings showing embodiment(s) of the disclosure.
Figs. 1 and 2 schematically show HVDC systems according to exemplifying embodiments of the present disclosure.
Figs. 3a, 3b and 3c schematically show control systems according to exemplifying embodiments of the present disclosure.
Fig. 4 shows a flowchart of a method according to an exemplifying embodiment of the present disclosure.

### DETAILED DESCRIPTION

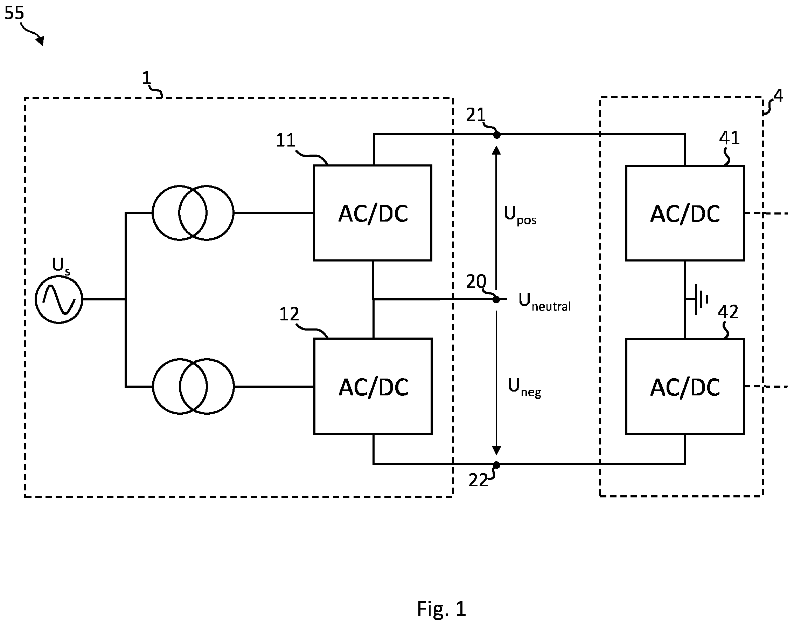

Fig. 1 schematically show an HVDC system 55 according to an exemplifying embodiment of the present disclosure.

The HVDC system 55 comprises a first HVDC converter arrangement 1 and a second HVDC converter arrangement 4. The first HVDC converter arrangement 1 and the second HVDC converter arrangement 4 are connected via transmission lines, which are indicated in Fig. 1 as solid lines.

The first HVDC converter arrangement 1 comprises an upper converter 11 and a lower converter 12 connected in series at a DC side of the first HVDC converter arrangement 1. The upper converter 11 is connected between a positive DC pole 21 and a common neutral bus 20, and the lower converter 12 is connected between a negative DC pole 22 and the common neutral bus 20. The common neutral bus 20 is not grounded, and the neutral voltage Uₙₑᵤₜᵣₐₗ at the common neutral bus 20 may be understood as floating.

The upper and lower converters 11, 12 are each shown in Fig. 1 as being connected to a voltage source Uₛ via a respective current source (each being shown in Fig. 1 as two overlapping circles). The upper pole 21 and the lower pole 22 of the converters 11, 12 are illustrated in Fig. 1 as being located on the transmission lines connecting the first and second HVDC converter arrangements 1, 4. However, it may be understood that the poles 21, 22 may be locations where the converters 11, 12 are connected to the transmission lines on a DC side of the HVDC arrangement 1.

A first DC voltage Uₚₒₛ across the upper converter is indicated by an arrow extending from the common neutral bus 20 to the upper pole 21. Correspondingly, a second DC voltage U_{neg} across the lower converter is indicated by an arrow extending from the common neutral bus 20 to the lower pole 22.

The second HVDC converter arrangement 4 comprises an upper converter 41 and a lower converter 42. The upper converter 41 of the second HVDC converter arrangement 4 is connected between the transmission line which is connected to the upper converter 11 of the first HVDC converter arrangement 1 and ground. Correspondingly, the lower converter 42 of the second HVDC converter arrangement 4 is connected between the transmission line which is connected to the lower converter 12 of the first HVDC converter arrangement 1 and ground. Further, each of the converters 41, 42 are configured to be connected, on an AC side, to a transmission grid or a station, which is indicated in Fig. 1 by dashed lines extending outward from the converters 41, 42.

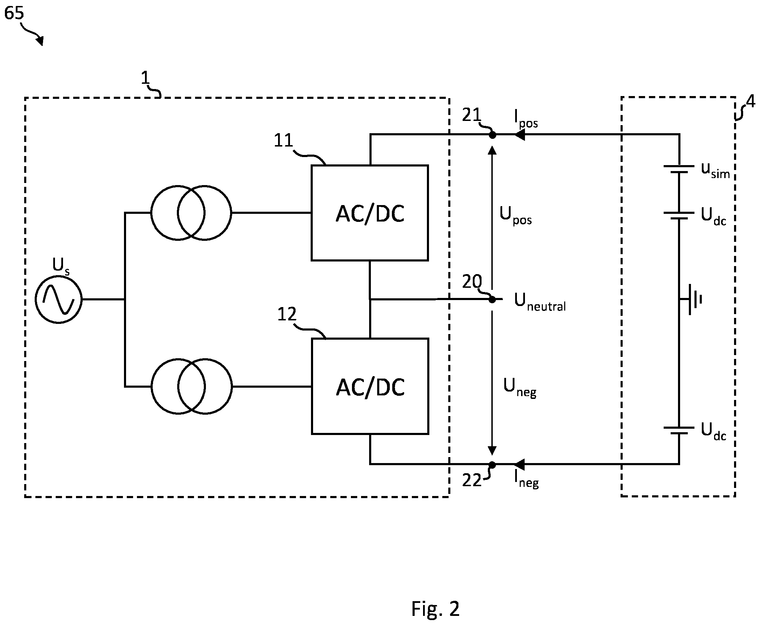

Fig. 2 schematically show a HVDC system 65 according to an exemplifying embodiment of the present disclosure.

The HVDC system 65 shown in Fig. 2 comprises similar features and components as the HVDC system shown in Fig. 1. Therefore, reference is made to the description relating to Fig. 1 for an increased understanding.

A difference between the HVDC system 65 as shown in Fig. 2 and the HVDC system shown in Fig. 1 is that the second HVDC converter arrangement 4 is replaced by two ideal DC sources U_{dc} rather than upper and lower converters (as shown in Fig. 1). This illustrates that the second HVDC converter arrangement 4 is configured to be operated in a DC voltage control mode, which may enable the converters of the second HVDC converter arrangement 4 to be modelled, or represented, as ideal DC sources U_{dc}. Modelling the converters of the second HVDC converter arrangement 4 as ideal DC sources U_{dc} may facilitate an improved control of the first HVDC converter arrangement 1. The illustrated ideal DC sources U_{dc} ensure that a positive current Iₚₒₛ flows, through one of the two transmission lines and via the upper pole 21, to the upper converter 11 of the first HVDC converter arrangement 1, and that a negative current I_{neg} flows, through the other of the two transmission lines and via the lower pole 22, to the lower converter 12 of the first HVDC converter arrangement 1.

Another difference is that Fig. 2 shows a simulated disturbance voltage uₛᵢₘ. In Fig. 2, the simulated disturbance voltage uₛᵢₘ is shown as being connected to the transmission line which is connected to the upper converter 11. However, it is to be understood that it this is simply an example, and that it could have been shown as being connected to the transmission line which is connected to the lower converter 12. The simulated disturbance voltage uₛᵢₘ may be understood as representing, or simulating, an actual disturbance (or perturbation). Further, the shown simulated disturbance voltage uₛᵢₘ is an asymmetrical disturbance, as it only affects one of the converters 11, 12, i.e., the upper converter 11 in this exemplifying embodiment.

If the HVDC system 65 as shown in Fig. 2, which is being affected by the simulated disturbance voltage uₛᵢₘ, was controlled by a method and/or control system in accordance with the prior art, such a method or control system would try to maintain the neutral voltage Uₙₑᵤₜᵣₐₗ at the common neutral bus 20 at, or close to, zero, in an attempt to maintain the stability of the first HVDC converter arrangement 1. However, trying to maintain the neutral voltage Uₙₑᵤₜᵣₐₗ at zero would cause a loss of symmetricity for the converters 11, 12 of the first HVDC converter arrangement 1. For example, the converters 11, 12 may be rated for a DC voltage of 525 kV, and the rated power for the converters may be 1000 MW. The illustrated ideal DC sources U_{dc} may provide the converters' 11, 12 rated DC voltage, i.e., 525 kV. However, when the simulated disturbance voltage uₛᵢₘ is introduced, which may, for the sake of example, be equal to 5 kV, then the voltage at the upper pole 21 would be equal to the voltage provided by the illustrated ideal DC source U_{dc} plus the simulated disturbance voltage uₛᵢₘ, which in this example is equal to 530 kV. The method and/or control systems according to the prior art would, firstly, adjust active power references for the upper and lower converters 11, 12 in order to try to maintain the neutral voltage Uₙₑᵤₜᵣₐₗ at zero. Thereby, the upper and lower converters 11, 12 would be operated at different active powers. More specifically, in this example, the upper converter 11 would operate above its rated power and the lower converter 12 would operate below its rated power in order to maintain the neutral voltage Uₙₑᵤₜᵣₐₗ at zero. Further, such an operation would, secondly, cause the voltage Uₚₒₛ across the upper converter 11 to be equal to the ideal DC source U_{dc} plus the simulated disturbance voltage uₛᵢₘ, i.e. 530 kV, while the voltage U_{neg} across the lower converter 12 would remain at 525 kV, i.e. equal to the ideal DC source U_{dc}. Thereby, symmetricity, with respect to voltages Uₚₒₛ, U_{neg} across the converters 11, 12, would be lost. In this example, the upper converter 11 would be operating at 5 kV above its rated voltage, while the lower converter 12 would be operating at its rated voltage. Thereby, the upper converter 11 would experience a much higher degree of wear than the lower converter 12, which may increase the risk of a future failure of the upper converter 11, i.e. the converter which is directly experiencing an asymmetrical disturbance. In this example, the upper converter 11 would operate above its rated voltage and above its rated power, while lower converter 12 would operate at its rated voltage and below its rated power. In summary, the prior art proposes methods and control systems which lead to a loss in symmetricity which in turn leads to undue, and unbalanced, wear on the converters 11, 12.

In contrast to the prior art, the present disclosure provides improved method and control systems which aim at maintaining a difference between the voltages Uₚₒₛ, U_{neg} across the converters 11, 12 at, or close to, zero, thereby decreasing, or minimizing, the DC voltage difference. If the first HVDC arrangement 11 is being subjected to the above-discussed example, in which the ideal DC sources U_{dc} provides the converters' 11, 12 rated DC voltage, i.e. 525 kV, and a simulated disturbance voltage uₛᵢₘ, is provided to the upper converter 11, and is controlled by method and control systems according to present disclosure, then outcome will be greatly improved. Firstly, the proposed method and control systems may be configured to continuously, or intermittently, measure and compare the voltages Uₚₒₛ, U_{neg} across the converters 11, 12. Thereby, the present embodiment allows for determining a DC voltage difference between the DC voltage Uₚₒₛ across the upper converter 11 and the DC voltage U_{neg} across the lower converter 12, which in turn may allow for adjusting the DC voltage Uₙₑᵤₜᵣₐₗ at the common neutral bus 20, thereby decreasing the DC voltage difference. In the discussed example, the DC voltage Uₙₑᵤₜᵣₐₗ at the common neutral bus 20 may be adjusted to be equal to 2.5 kV, which would cause the Uₚₒₛ, U_{neg} across the converters 11, 12 to be equal to 527.5 kV. Correspondingly, the DC voltage difference would be equal to zero. As the converters 11, 12 are configured to be operated in an active power mode, the active power output would be equal for both of the converters 11, 12. However, both converters 11, 12 would be operating at voltage above their rated voltage. Nevertheless, in comparison to the prior art, both converters 11, 12 would be operating at 2.5 kV above their rated voltage, rather than one of the converters being operated at 5 kV above its rated voltage, i.e. twice as high. Hence, both converters 11, 12 would experience the same amount of wear, and said wear would be greatly reduced (halved in this example) in comparison to the wear caused by the methods and control systems of the prior art. Phrased differently, the embodiments of present disclosure provide an improved symmetricity in comparison to the prior art.

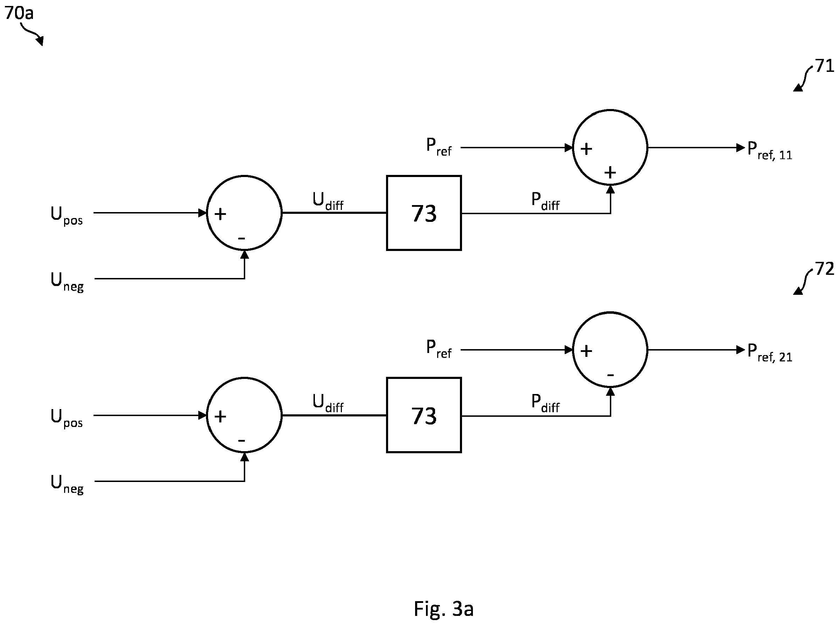

Fig. 3a schematically shows a control system 70a according to an exemplifying embodiment of the present disclosure.

The control system 70a comprises a first portion 71 and a second portion 72. The first and second portions 71, 72 both receive a positive voltage Uₚₒₛ across an upper converter of an HVDC converter arrangement according to the first aspect of the present disclosure (not shown; see e.g. Figs. 1 and 2), and a negative voltage U_{neg} across a lower converter of an HVDC converter arrangement according to the first aspect of the present disclosure (not shown; see e.g. Figs. 1 and 2). Then, the first and second portions 71, 72 are configured to calculate a voltage difference U_{diff} which is equal to the upper voltage Uₚₒₛ minus the negative voltage U_{neg}. The first portion 71 and the second portion 72 of the control system 70a may further, each, comprise a calculating unit 73 which may be configured to calculate a power reference difference P_{diff} based on the calculated voltage difference U_{diff}.The first portion 71 is configured to calculate, or update, a first power reference P_{ref,11} by adding the calculated voltage difference U_{diff} to a predetermined power reference P_{ref}. Correspondingly, the second portion 72 is configured to calculate, or update, a second power reference P_{ref,21} by adding the calculated voltage difference U_{diff} to a predetermined power reference P_{ref}.

The first portion 71 and the second portion 72 of the control system 70a may be configured to control a respective converter 11, 12 of the upper converter 11 and the lower converter 12. Further, the first portion 71 and the second portion 72 of the control system 70a may be realized in one, i.e. a single, control unit, or may, alternatively, be realized in separate units.

It is to be understood that the control system 70a, or portions of the control system 70a, may be comprised by the systems and/or arrangements shown in Figs. 1 and 2 even though they are not explicitly illustrated in Figs. 1 and 2. For example, said systems and/or arrangements may comprise hardware and/or computational units configured to run the control system 70a, or portions of the control system 70a. Further, the control system 70a, or portions of the control system 70a, may be communicatively connected to components of said systems and/or arrangements, so as to allow for measurements of signals, voltages and/or currents. Furthermore, the control system 70a, or portions of the control system 70a, may be configured to receive and/or transmit signals from and/or to said systems and arrangements.

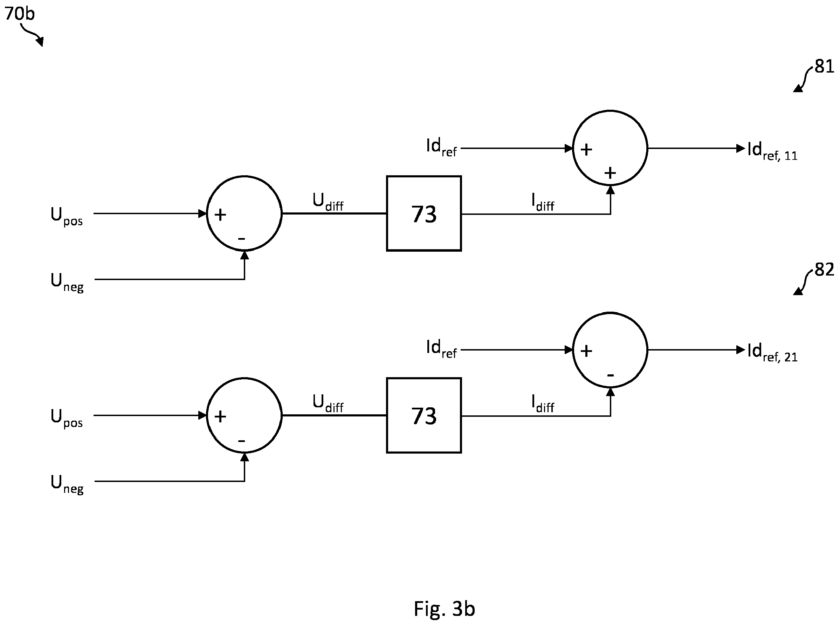

Fig. 3b shows a control system 70b according to an exemplifying embodiment of the present disclosure.

The control system 70b shown in Fig. 3b comprises similar features and components as the control system shown in Fig. 3a. Therefore, reference is made to the description relating to Fig. 3a for an increased understanding.

The control system 70b comprises a first portion 81 and a second portion 82 which both receive a positive voltage Uₚₒₛ across an upper converter of an HVDC converter arrangement according to the first aspect of the present disclosure (not shown; see e.g. Figs. 1 and 2), and a negative voltage U_{neg} across a lower converter of an HVDC converter arrangement according to the first aspect of the present disclosure (not shown; see e.g. Figs. 1 and 2), and are configured to calculate a voltage difference U_{diff} which is equal to the upper voltage Uₚₒₛ minus the negative voltage U_{neg}.

A difference between the control system 70b and the control system shown in Fig. 3a is that calculating units 73 of the first and the second portions 81, 82 are configured to calculate a current difference I_{diff} based on the calculated voltage difference U_{d}iff.

The first portion 81 is configured to calculate, or update, a first active current reference Id_{ref}, ₁₁ by adding the current difference I_{diff} to an active current reference Id_{ref}. The second portion 82 is configured to calculate, or update, a second active current reference Id_{ref, 12} by adding the current difference I_{diff} to the active current reference Id_{ref}.

The active current reference Id_{ref} may be the d-component of the active current reference, in the dq-domain. Further, when converting from the ABC-domain to the dq-domain, the predetermined power reference P_{ref} may directly proportional to the active current reference Id_{ref}. Consequently, the first and second active current references Id_{ref, 11}, Id_{ref}, ₁₂ may be directly proportional to the first and second power references P_{ref,21}, P_{ref,22}.

Therefore, the control system 70b may be configured to provide an alternative way of adjusting a DC voltage at the common neutral bus, which may comprise calculating the current difference I_{diff} based on a determined DC voltage difference U_{diff}, updating the first active current reference Id_{ref, 11} to be equal to the active current reference Id_{ref} plus, or minus, the current difference I_{diff}, and updating the second active current reference Id_{ref}, ₁₂ to be equal to the active current reference ld_{ref} minus, or plus, the current difference I_{diff}.

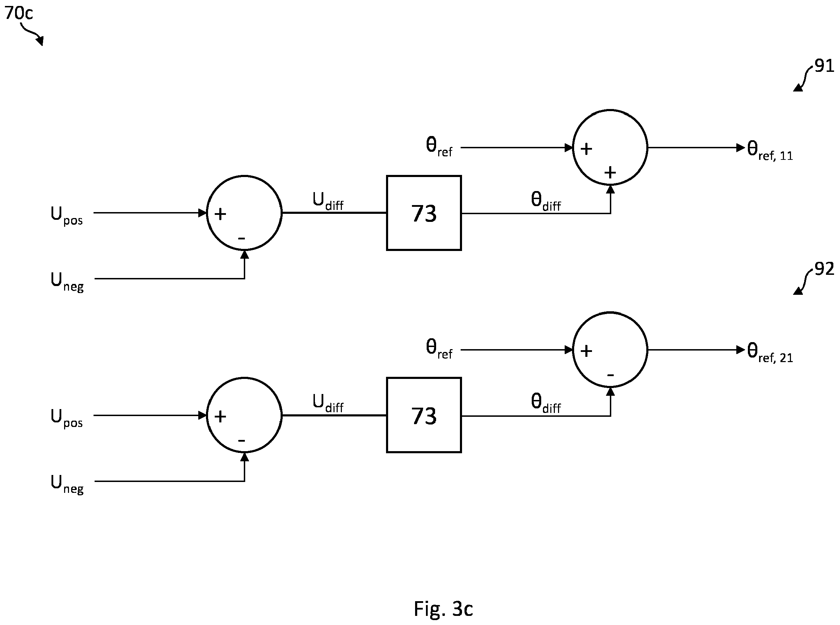

Fig. 3c shows a control system 70c according to an exemplifying embodiment of the present disclosure.

The control system 70c shown in Fig. 3c comprises similar features and components as the control systems shown in Figs. 3a and 3b. Therefore, reference is made to the descriptions relating to Fig. 3a and 3b for an increased understanding.

The control system 70c comprises a first portion 91 and a second portion 92 which both receive a positive voltage Uₚₒₛ across an upper converter of an HVDC converter arrangement according to the first aspect of the present disclosure (not shown; see e.g. Figs. 1 and 2), and a negative voltage U_{neg} across a lower converter of an HVDC converter arrangement according to the first aspect of the present disclosure (not shown; see e.g. Figs. 1 and 2), and are configured to calculate a voltage difference U_{diff} which is equal to the upper voltage Uₚₒₛ minus the negative voltage U_{neg}.

A difference between the control system 70c and the control systems shown in Fig. 3a and 3b is that calculating units 73 of the first and the second portions 81, 82 are configured to calculate an angle difference θ_{diff} based on the calculated voltage difference U_{diff}.

The first portion 91 is configured to calculate, or update, a first angle reference θ_{ref, 11} by adding the angle difference θ_{diff} to an angle reference θ_{ref}. The second portion 92 is configured to calculate, or update, a second angle reference θ_{ref, 12} by adding the angle difference θ_{diff} to the angle reference θ_{ref}.

According to the standard power angle equation, the transfer of active power between two sources is directly proportional to an angle difference between said two sources. With respect to the present disclosure, the two sources may be understood as being a grid, or source (indicated a Uₛ in Figs. 1 and 2) to which a converter (indicated as 11 and 12 in Figs. 1 and 2) is connected to, on an AC-side. Therefore, the present disclosure may comprise measuring, receiving and/or calculating the angle(s) at the two sources, as defined in the above.

Thereby, the predetermined power reference P_{ref} may be directly proportional to the angle difference θ_{diff}. Consequently, the first and second angle references θ_{ref, 11}, θ_{ref, 12} may be directly proportional to the first and second power references P_{ref,21}, P_{ref,22}.

Therefore, the control system 70c may be configured to provide an alternative way of adjusting a DC voltage at the common neutral bus, which may comprise calculating the angle difference θ_{diff} based on a determined DC voltage difference U_{diff}, updating the first angle reference θ_{ref, 11} to be equal to the angle reference θ_{ref} plus, or minus, the angle difference θ_{diff}, and updating the second angle reference θ_{ref, 12} to be equal to the angle reference θ_{ref} minus, or plus, the angle difference θ_{diff}.

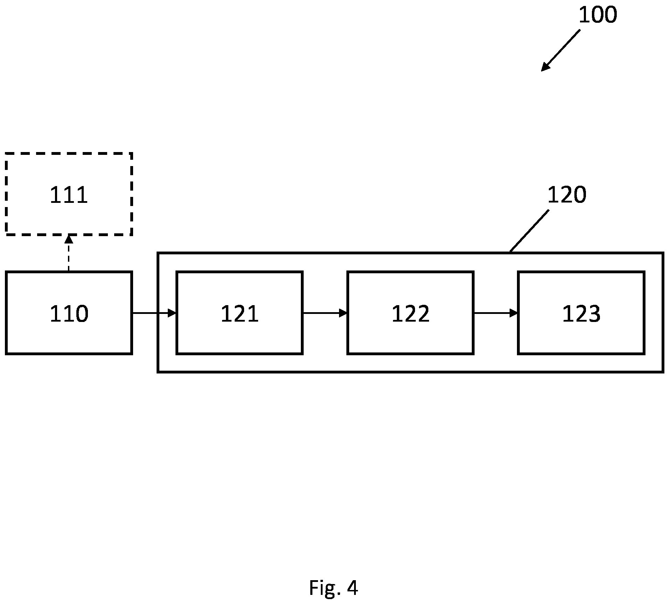

Fig. 4 shows a flowchart of a method 100 according to an exemplifying embodiment of the present disclosure.

The method 100 is for controlling an HVDC converter arrangement in accordance with the second aspect of the present disclosure. The method 100 comprises the steps of determining 110 a DC voltage difference between a first DC voltage across the upper converter and a second DC voltage across the lower converter, and adjusting 120 a DC voltage at the common neutral bus so as to decrease the DC voltage difference.

The step of adjusting 120 a DC voltage at the common neutral bus may comprise the (sub-) steps of calculating 121 a power reference difference based on said determined DC voltage difference, updating 122 the first power reference to be equal to a predetermined power reference plus, or minus, the power reference difference, and updating 123 the second power reference to be equal to a predetermined power reference minus, or plus, the power reference difference.

Further, the method 100 may comprise limiting 111 the DC voltage at the common neutral bus using a surge arrester, in response to a determination that the DC voltage difference is above a predetermined value.

Generally, all terms used in the claims are to be interpreted according to their ordinary meaning in the technical field, unless explicitly defined otherwise herein. All references to "a/an/the element, apparatus, component, means, module, action, etc." are to be interpreted openly as referring to at least one instance of the element, apparatus, component, means, module, action, etc., unless explicitly stated otherwise. The actions of any method disclosed herein do not have to be performed in the exact order disclosed, unless explicitly stated.

While the present invention has been illustrated in the appended drawings and the foregoing description, such illustration is to be considered illustrative or exemplifying and not restrictive; the present invention is not limited to the disclosed embodiments. Other variations to the disclosed embodiments can be understood and effected by those skilled in the art in practicing the claimed invention, from a study of the drawings, the disclosure, and the appended claims. In the appended claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A method (100) for controlling a High Voltage Direct-Current, HVDC, converter arrangement (1), wherein the HVDC converter arrangement comprises:
an upper converter (11) connected between a positive DC pole (21) and a common neutral bus (20),
a lower converter (12) connected between a negative DC pole (22) and the common neutral bus;
wherein the method comprises:
determining (110) a DC voltage difference between a first DC voltage (Uₚₒₛ) across the upper converter and a second DC voltage (U_{neg}) across the lower converter; and
adjusting (120) a DC voltage (Uₙₑᵤₜᵣₐₗ) at the common neutral bus so as to decrease the DC voltage difference.

2. The method according to claim 1, wherein the upper converter and the lower converter are configured to operate at active power level based on a first power reference (P_{ref, 11}) and a second power reference (P_{ref, 21}), respectively.

3. The method according to claim 2, wherein the step of adjusting a DC voltage at the common neutral bus comprises:
calculating (121) a power reference difference (P_{diff}) based on said determined DC voltage difference;
updating (122) the first power reference to be equal to a predetermined power reference (P_{ref}) plus, or minus, the power reference difference; and
updating (123) the second power reference to be equal to a predetermined power reference minus, or plus, the power reference difference.

4. The method according to claim 1, wherein the step of adjusting a DC voltage at the common neutral bus comprises:
calculating a current difference (I_{diff}) based on said determined DC voltage difference;
updating a first active current reference (Id_{ref, 11}) to be equal to an active current reference (Id_{ref}) plus, or minus, the current difference; and
updating a second active current reference (Id_{ref, 12}) to be equal to the active current reference minus, or plus, the current difference;
or
wherein the step of adjusting a DC voltage at the common neutral bus comprises:
calculating an angle difference (θ_{diff}) based on said determined DC voltage difference;
updating a first angle reference (θ_{ref, 11}) to be equal to an angle reference (θ_{ref}) plus, or minus, the angle difference; and
updating a second angle reference (θ_{ref, 12}) to be equal to the angle reference minus, or plus, the angle difference.

5. The method according to any of claims 1 to 4, further comprising the steps of receiving (101) the DC voltage across the upper converter and receiving (102) the DC voltage across the lower converter.

6. A High Voltage Direct-Current, HVDC, converter arrangement (1) comprising an upper converter (11) connected between a positive DC pole (21) and a common neutral bus (20), and a lower converter (12) connected between a negative DC pole (22) and the common neutral bus, and a control system (70a-c), wherein the control system is configured to:
determine a DC voltage difference between a first DC voltage (Uₚₒₛ) across the upper converter and a second DC voltage (U_{neg}) across the lower converter; and
adjust a DC voltage (Uₙₑᵤₜᵣₐₗ) at the common neutral bus so as to decrease the DC voltage difference.

7. The HVDC converter arrangement according to claim 6, wherein the upper converter and the lower converter are configured to operate at an active power level based on a first power reference (P_{ref, 11}) and a second power reference (P_{ref, 21}), respectively.

8. The HVDC converter arrangement according to claim 7, wherein the control system is configured to adjust the DC voltage at the common neutral bus by being configured to:
calculate a power reference difference (P_{diff}) based on said determined DC voltage difference;
update the first power reference to be equal to a predetermined power reference (P_{ref}) plus, or minus, the power reference difference; and
update the second power reference to be equal to a predetermined power reference minus, or plus, the power reference difference.

9. The HVDC converter arrangement according to claim 6, wherein the control system is configured to adjust the DC voltage at the common neutral bus by being configured to:
calculate a current difference (I_{diff}) based on said determined DC voltage difference;
update a first active current reference (Id_{ref, 11}) to be equal to an active current reference (Id_{ref}) plus, or minus, the current difference; and
update a second active current reference (Id_{ref, 12}) to be equal to the active current reference minus, or plus, the current difference;
or
wherein the control system is configured to adjust the DC voltage at the common neutral bus by being configured to:
calculate an angle difference (θ_{diff}) based on said determined DC voltage difference;
update a first angle reference (θ_{ref, 11}) to be equal to an angle reference (θ_{ref}) plus, or minus, the angle difference; and
update a second angle reference (θ_{ref, 12}) to be equal to the angle reference minus, or plus, the angle difference.

10. The HVDC converter arrangement according to any of claims 7 to 9, further comprising a surge arrester connected at the common neutral bus, and wherein the control system is further configured to:
if the DC voltage difference is above a predetermined value, limit the DC voltage at the common neutral bus using the surge arrester.

11. The HVDC converter arrangement according to any of claims 7 to 10, wherein the control system is further configured to receive the DC voltage across the upper converter and to receive the DC voltage across the lower converter.

12. The HVDC converter arrangement according to claim 11 or the method according to claim 5, wherein the DC voltage across the upper converter and the DC voltage across the lower converter are received within a predetermined time interval.

13. The HVDC converter arrangement according to any of claims 7 to 12, wherein the upper and lower converters (11, 12) are rated for the same voltage.

14. The HVDC converter arrangement according to any of claims 7 to 13, wherein the HVDC converter arrangement is configured to be connected to another HVDC converter arrangement via the positive and negative DC poles (21, 22).

15. An HVDC system (55) comprising a first HVDC converter arrangement (1) according to any of claims 7 to 14, and a second HVDC converter arrangement (4), wherein the first and second HVDC converter arrangements are connected via transmission lines.
